# EUROPÄISCHE PATENTSCHRIFT

(11) **EP 0 942 185 B1**
(45) Veröffentlichungstag und Bekanntmachung des Hinweises auf die Patenterteilung: **13.10.2004**
(21) Anmeldenummer: 99100931.7
(22) Anmeldetag: 20.01.1999
(51) Int. Cl.: F16C 1/26

(54) **Bowdenzug zur Übertragung von Zugkräften**
Remote control cable for transmitting traction forces
Commande par cable pour la transmission de forces de traction

(30) Priorität: 12.03.1998 DE 19810665
(43) Veröffentlichungstag der Anmeldung: 15.09.1999
(73) Patentinhaber: Dr.Ing. h.c.F. Porsche Aktiengesellschaft, 70435 Stuttgart (DE)
(72) Erfinder: Gutschner, Andreas, 71706 Markgröningen (DE)

(56) Entgegenhaltungen:
- EP-A- 0 433 245
- DE-A- 4 026 914
- DE-U- 29 705 650
- FR-A- 2 730 772
- US-A- 4 635 498
- US-A- 4 685 350
- US-A- 5 579 662
- US-A- 5 596 908

## Beschreibung

Die Erfindung betrifft einen Bowdenzug zur Übertragung von Zugkräften gemäß dem Oberbegriff des Anspruchs 1.

Bei Bowdenzügen zur Übertragung von Zugkräften, wie sie beispielsweise bei der Türinnenbetätigungseinrichtung des Porsche Boxster angewandt werden, ist auf das festzulegende Ende der Bowdenzughülse ein mit einem radial vorstehenden Kragen versehene Metallhülse aufgepreßt, wobei der Kragen abschnittsweise in einen korrespondierenden Schlitz einer am Trägerteil der Türinnenbetätigungseinrichtung angeordneten Aufnahme eingesteckt wird. Benachbart dem Schlitz sind am Trägerteil zwei beabstandete Klipszungen angeformt, in die die Bowdenzughülle durch eine Verschiebebewegung quer zur Längsrichtung der Bowdenzughülle eindrückbar ist. Zum Einklipsen der Bowdenzughülle ist ein relativ hoher manueller Kraftaufwand erforderlich. Darüber hinaus ist bei dieser Bowdenzuganordnung nicht sichergestellt, daß das Ende des Bowdenzuges in der Befestigungsstellung verbleibt.

Aus der US-A-4 685 350 ist ein Bowdenzug zur Übertragung von Zugkräften bekannt, der sich aus einer äußeren flexiblen Bowdenzughülle und einem abschnittsweise in dieser geführten inneren Zugorgan zusammensetzt, wobei zumindest ein Ende der Bowdenzughülle an einer Aufnahme eines ortsfesten Haltegliedes in Längsrichtung festgelegt ist, und wobei an dem festzulegenden Ende der Bowdenzughülle ein angepreßtes Endstück vorgesehen ist, das in eine etwa parallel zur Längsrichtung der Bowdenzughülle sich erstreckende Aufnahme des Haltegliedes einschiebbar ist und in dieser mittels eines am Halteglied ausgebildeten federnden Stützarmes in axialer Richtung fixiert ist.

Erfindungsgemäß wird diese Aufgabe durch die Merkmale des Anspruchs 1 gelöst. Weitere, die Erfindung in vorteilhafter Weise ausgestaltende Merkmale enthalten die Unteransprüche.

Die mit der Erfindung hauptsächlich erzielten Vorteile sind darin zu sehen, daß ein am festzulegenden Ende der Bowdenzughülle angespritztes Endstück über eine in Längsrichtung der Bowdenzughülle ausgerichtete Steckverbindung in einfacher Art und Weise mit der Aufnahme verbindbar ist und daß in der vollständig eingeschobenen Befestigungsstellung eine zusätzliche axiale Fixierung gegen Lösen durch angeformte Stützarme erfolgt. Die Stützarme lassen sich zur Demontage der Verbindung in eine Freigabestellung verschwenken. Das angespritzte Endstück und die korrespondierende Aufnahme lassen sich einfach und kostengünstig herstellen. Sobald die Führungsnuten am Endstück Kontakt mit den Haltestegen der Aufnahme haben, wird die Bowdenzughülle beim Verschwenken des Betätigungsgriffes selbsttätig in die Befestigungsstellung gezogen (Endlagensicherung).

Die Erfindung ist nachstehend anhand des in den Figuren dargestellten Ausführungsbeispieles näher erläutert.

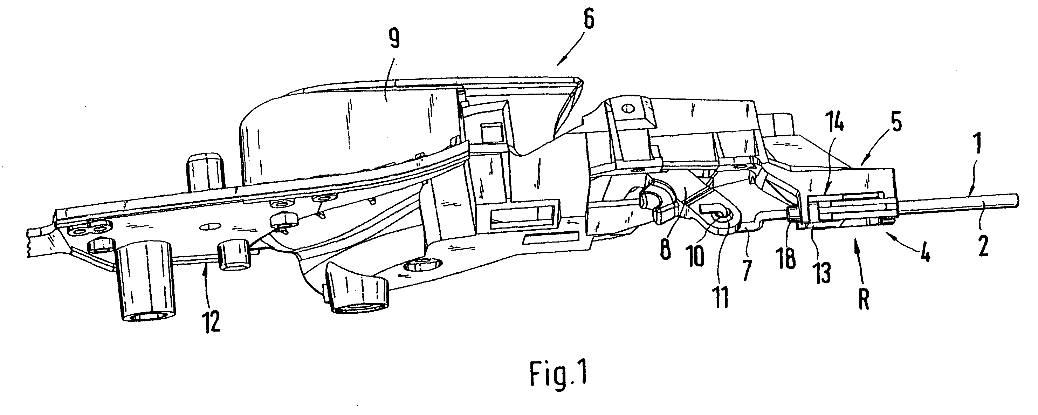

Es zeigen
- Fig. 1: eine perspektivische Ansicht auf eine Türinnenbetätigung eines Kraftfahrzeuges mit einem an den Betätigungsgriff angeschlossenen Bowdenzug,
- Fig. 2: eine perspektivische Ansicht in Pfeilrichtung R der Fig. 1 auf das festzulegende Ende der Bowdenzughülle und des Halteglied an der Trägerplatte der Türinnenbetätigung bei nicht montiertem Bowdenzug,

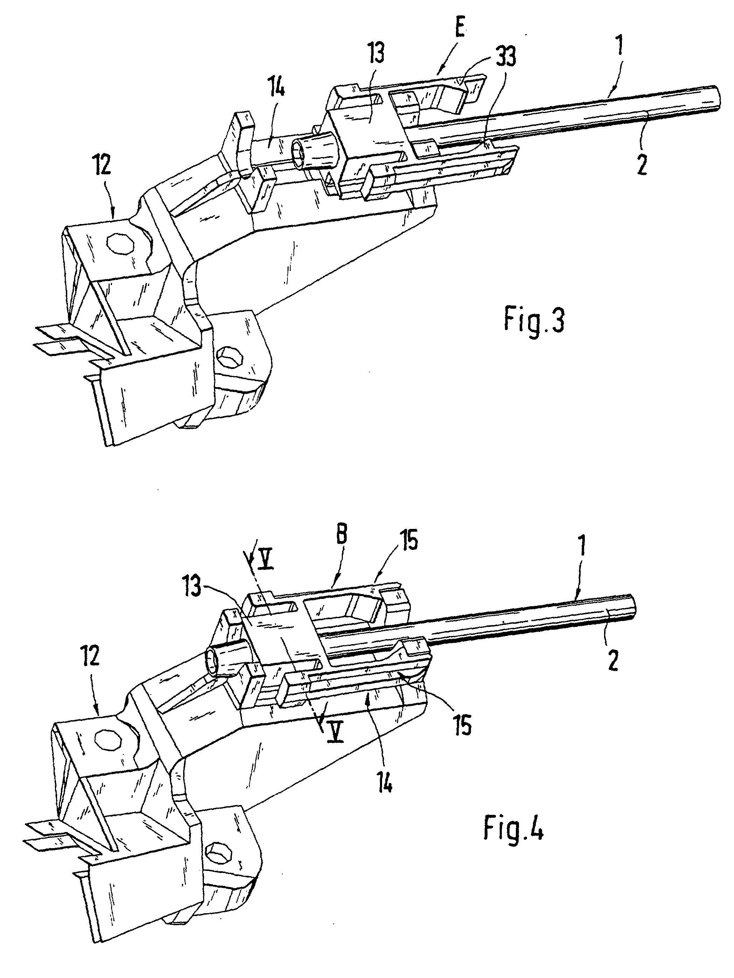

- Fig. 3: eine Ansicht ähnlich Fig. 2, jedoch in Einführstellung des festzulegenden Endes der Bowdenzughülle,
- Fig. 4: eine Ansicht ähnlich Fig. 3, jedoch in Befestigungsstellung der Bowdenzughülle,

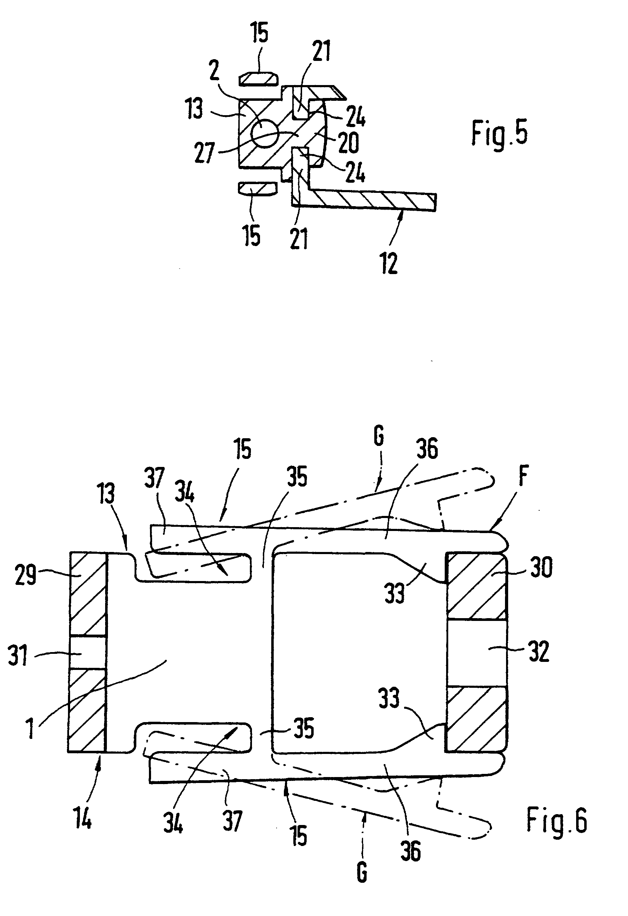

- Fig. 5: einen Schnitt nach der Linie V-V der Fig. 4,
- Fig. 6: eine Ansicht von oben auf Fig. 4 in Befestigungsstellung des Endstückes der Bowdenzughülle und

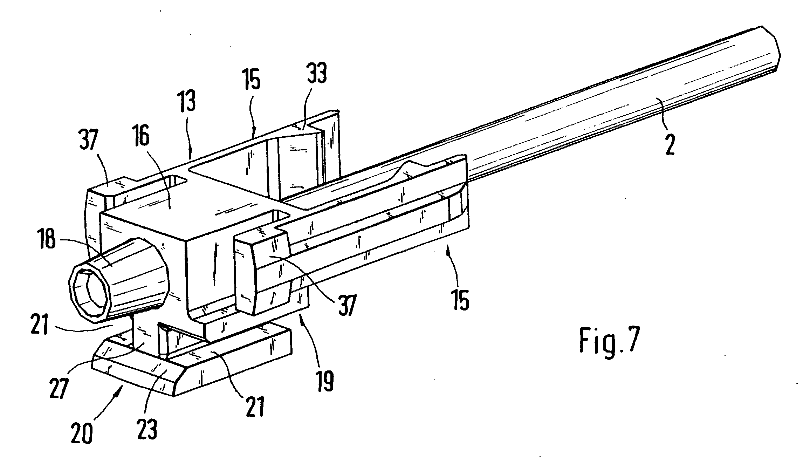

- Fig. 7: eine perspektivische Ansicht auf das festzulegende Ende der Bowdenzughülle mit dem Endstück.

Ein Bowdenzug 1 zur Übertragung von Zugkräften setzt sich aus einer äußeren flexiblen Bowdenzughülle 2 und einem in der Bowdenzughülle 2 geführten inneren Zugorgan 3 zusammen, wobei zumindest ein Ende 4 der Bowdenzughülle 2 an einem ortsfesten Halteglied 5 axial festgelegt ist. Das Zugorgan 3 wird beispielsweise durch ein Drahtseil gebildet, das die Bowdenzughülle 2 beidseitig überragt.

Im Ausführungsbeispiel ist der Bowdenzug 1 einer Türinnenbetätigungseinrichtung 6 an einem Kraftfahrzeug zugeordnet, wobei ein Ende des Zugorganes 3 in nicht näher dargestellter Weise mit einem Türschloß verbunden ist. Das andere Ende des Zugorganes 3 weist einen endseitigen Haken 7 auf, der mit einem Schwenkarm 8 eines Betätigungsgriffes 9 verbindbar ist. Der etwa Z-förmig profilierte Haken 7 ist in eine Öffnung 10 des Schwenkarmes 8 eingesetzt, wobei zwischen Haken 7 und Öffnung 10 eine Tülle 11 aus Kunststoff zwischengeschaltet ist. Der Betätigungsgriff 9 ist an einem Trägerteil 12 schwenkbar gelagert, das im Ausführungsbeispiel an einer nicht näher dargestellten Türinnenverkleidung befestigt ist.

Erfindungsgemäß ist am festgelegten Ende 4 der Bowdenzughülle 2 ein mit dieser verbundenes Endstück 13 vorgesehen, das in eine etwa parallel zur Längsrichtung A-A der Bowdenzughülle 2 ausgerichtete Aufnahme 14 des Haltegliedes 5 einschiebbar ist. Das Endstück 13 ist in der vollständig eingeschobenen Befestigungsstellung B durch wenigstens einen sich an der Aufnahme 14 abstützenden federnden Stützarm 15 in axialer Richtung fixiert. Das Endstück 13 ist außenseitig an das freie Ende der Bowdenzughülle 2 angespritzt.

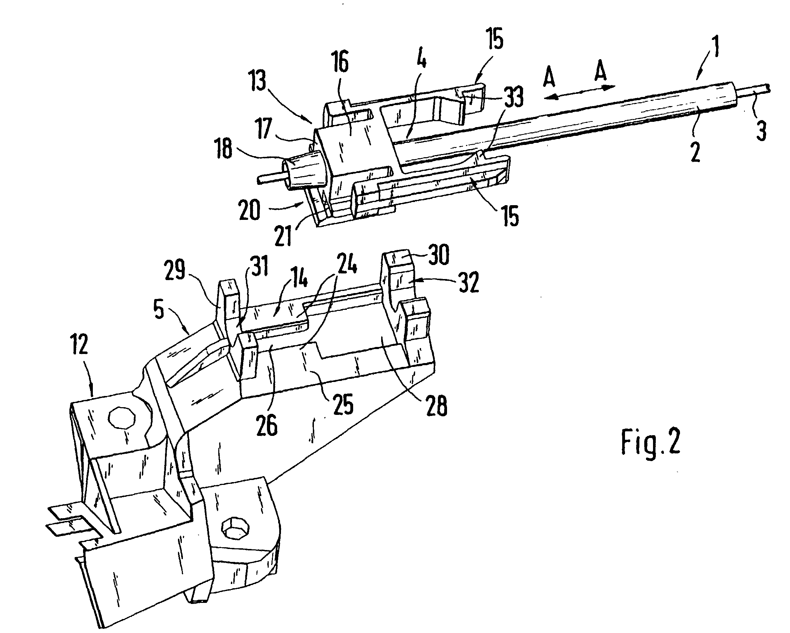

Gemäß Fig. 2 umfaßt das Endstück 13 einen die Bowdenzughülle 2 etwa mittig aufnehmenden prismatischen Grundkörper 16, der an der dem Haken 7 zugewandten Stirnseite 17 einen kurzen vorstehenden hohlen Stutzen 18 aufweist, durch den das Zugorgan 3 hindurchgeführt ist. Von einer Bodenwandung 19 des Grundkörpers 16 ist ein profilierter, sich in Längsrichtung der Bowdenzughülle 2 erstreckenden Fußabschnitt 20 weggeführt, der im Ausführungsbeispiel etwa T-förmig profiliert ist. Der T-förmige Fußabschnitt 20 und die beabstandete Bodenwandung 19 bilden zwei gegenüberliegende, etwa U-förmig profilierte Führungsnuten 21. Der parallel zur Bodenwandung 19 verlaufende Flansch 22 des T-förmigen Fußabschnittes 20 überragt mit seinem in Einschubrichtung C gesehen liegenden Ende die Stirnseite 17 geringfügig und weist eine Einführschräge 23 auf. Das Halteglied 5 ist im Ausführungsbeispiel einstückig mit dem Trägerteil 12 der Türinnenbetätigung 6 ausgebildet, wobei die am Halteglied 5 vorgesehene Aufnahme 14 zwei beabstandet angeordnete Haltestege 24 umfaßt, auf die die Führungsnuten 21 des Endstückes 13 aufschiebbar sind.

Die Haltestege 24 sind einstückig mit einem ebenen Wandabschnitt 25 des Trägerteiles 12 ausgebildet. Zwischen den beabstandeten Haltestegen 24 ist eine Ausnehmung 26 vorgesehen, wobei die lichte Weite D der Ausnehmung 26 geringfügig größer ist als die Dicke des hindurchzuführenden Verbindungssteges 27 des T-förmigen Außenabschnittes 20.

Die Längserstreckungen der Haltestege 24 und der Führungsnuten 21 sind annähernd gleich lang. Die Führungsnuten 21 erstrecken sich über die gesamte Länge des prismatischen Grundkörpers 16. Den beiden Haltestegen 24 vorgelagert ist eine etwa rechteckförmige Einführöffnung 28, durch die der Fußabschnitt 20 des prismatischen Körpers 16 in die Aufnahme 14 einsetzbar und Führungsnuten 21 auf die Haltestege 24 aufschiebbar sind (siehe Einführstellung E). Die Aufnahme 14 umfaßt ferner zwei beabstandet angeordnete etwa rechtwinkelig zum Wandabschnitt 25 ausgerichtete Querstege 29, 30, wobei jeder Quersteg 29, 30 eine etwa mittige, einseitig offene Schlitzöffnung 31, 32 aufweist. Durch die Schlitzöffnungen 31, 32 ist die Bowdenzughülle 2 bzw. der Stutzen 18 hindurchgeführt.

Der dem Schwenkarm 8 näherliegene Quersteg 29 grenzt an das vorneliegende Ende der beiden Haltestege 24 an, wogegen der andere, weiter hintenliegende Quersteg 30 mit dem hinteren Ende der Einführöffnung 28 zusammenfällt. Zur axialen Sicherung des Endstückes 13 in der Befestigungsstellung B sind am Endstück 13 vorzugsweise zwei beabstandet angeordnete federnde Stützarme 15 ausgebildet, die sich in der Befestigungsstellung B mit nach innen gerichteten Rastnasen 33 formschlüssig an der Innenseite der Querstege 30 abstützen. Die beiden Stützarme 15 sind an beiden Längsseiten 34 des prismatischen Grundkörpers 16 von kurzen querverlaufenden Stegen 35 weggeführt und erstrecken sich parallel zur Längsrichtung der Bowdenzughülle 2. Jeder Stützarm 15 umfaßt einen den Grundkörper 16 in Längsrichtung überragenden ersten langgestreckten Armabschnitt 36, an den örtlich die nach innen gerichteten Rastnasen 33 ausgebildet sind.

Der erste Armabschnitt 36 ist mit einem zweiten kurzen Armabschnitt 37 einstückig verbunden, der parallel und mit geringem Abstand zur Längsseite 34 des prismatischen Grundkörpers 16 verläuft. Durch Druckbeaufschlagung nach innen auf die beiden kurzen Armabschnitte 37 werden die ersten Armabschnitte 36 von einer Wirkstellung F nach außen in eine Freigabestellung G verschwenkt.

## Patentansprüche

1. Bowdenzug (1) zur Übertragung von Zugkräften, der sich aus einer äußeren flexiblen Bowdenzughülle (2) und einem abschnittsweise in dieser geführten inneren Zugorgan (3) zusammensetzt, wobei zumindest ein Ende (4) der Bowdenzughülle (2) an einer Aufnahme (14) eines ortsfesten Haltegliedes (5) in Längsrichtung festgelegt ist, und wobei an dem festzulegenden Ende (4) der Bowdenzughülle (2) ein Endstück (13) vorgesehen ist, das in eine etwa parallel zur Längsrichtung der Bowdenzughülle (2) sich erstreckende Aufnahme (14) des Haltegliedes (5) einschiebbar ist und in dieser mittels wenigstens eines federnden Stützarmes (15) in axialer Richtung fixiert ist, **gekennzeichnet durch** einen das Endstück (13) bildenden, an die Bowdenzughülle (2) angespritzten prismatischen Grundkörper (16) mit einem profilierten, in die Aufnahme (14) des Haltegliedes (5) einschiebbaren Fußabschnitt (20) und an dem Grundkörper (16) gegenüberliegend angebrachten, die Bowdenzughülle (2) axial fixierenden federnden Stützarmen (15).

2. Bowdenzug nach Anspruch 1, **dadurch gekennzeichnet, daß** der Fußabschnitt (20) etwa T-förmig profiliert ist, wobei der Fußabschnitt (20) und die darüberliegende Bodenwandung (19) zwei gegenüberliegende, etwa U-förmig profilierte Führungsnuten (21) bilden.

3. Bowdenzug nach einem der vorangegangenen Ansprüche, **dadurch gekennzeichnet, daß** die am Halteglied (5) vorgesehene Aufnahme (14) zwei beabstandet angeordnete Haltestege (24) umfaßt, auf die die Führungsnuten (21) des Endstückes (13) aufschiebbar sind.

4. Bowdenzug nach Anspruch 3, **dadurch gekennzeichnet, daß** zwischen den beiden beabstandeten Haltestegen (24) eine Ausnehmung (26) vorgesehen ist und daß den Haltestegen (24) in Einschubrichtung gesehen eine Einführöffnung (28) vorgelagert ist.

5. Bowdenzug nach einem der vorangegangenen Ansprüche, **dadurch gekennzeichnet, daß** die beiden Stützarme (15) lediglich an kurze quer zur Bowdenzughülle (2) verlaufende Stege (35) angeschlossen sind und daß die Stützarme (15) durch Druckbeaufschlagung von einer Wirkstellung (F) in eine Freigabestellung (G) verlagerbar sind.

6. Bowdenzug nach einem der vorangegangenen Ansprüche, **dadurch gekennzeichnet, daß** jeder Stützarm (15) einen den Grundkörper (15) in Längsrichtung überragenden ersten langgestreckten Armabschnitt (36) umfaßt, an dem örtlich eine angeformte Rastnase (33) vorgesehen ist, und daß der erste langgestreckte Armabschnitt (36) einstückig mit einem kurzen zweiten Armabschnitt (37) verbunden ist, wobei durch Zusammendrücken der kurzen Armabschnitte (37) die Stützarme (15) in ihre Freigabestellung (G) verschwenkt werden.

7. Bowdenzug nach einem der vorangegangenen Ansprüche, **dadurch gekennzeichnet, daß** der Bowdenzug (1) einer Türinnenbetätigungseinrichtung (6) zugeordnet ist und daß das Halteglied (5) einstückig mit einem Trägerteil (12) für den Betätigungsgriff (9) ausgebildet ist.

## Claims

1. A Bowden cable (1) for the transmission of tensile forces, comprising an outer, flexible Bowden cable sheath (2) and an inner tensile component (3) partly guided therein, wherein at least one end (4) of the Bowden cable sheath (2) is secured in the longitudinal direction to a receiver (14) of a fixed holding member (5), and wherein an end piece (13) is provided on the end (4) of the Bowden cable sheath (2) to be secured, the end piece (13) being insertable into a receiver (14) of the holding member (5) and being axially fixed therein by means of at least one resilient supporting arm (15), the receiver (14) extending substantially parallel to the longitudinal direction of the Bowden cable sheath (2), **characterised by** a prismatic body (16) forming the end piece (13) and injection-moulded onto the Bowden cable sheath (2) and comprising a profiled foot portion (20), insertable into the receiver (14) of the holding member (5), and resilient supporting arms (15) attached to opposite sides of the body (16) and axially securing the Bowden cable sheath (2).

2. A Bowden cable according to claim 1, **characterised in that** the foot portion (20) is substantially T-shaped, the foot portion (20) and the base wall (19) lying thereabove forming two opposing, substantially U-shaped guide grooves (21).

3. A Bowden cable according to either one of the preceding claims, **characterised in that** the receiver (14) provided on the holding member (5) comprises two spaced retaining fins (24), onto which the guide grooves (21) of the end piece (13) are slidable.

4. A Bowden cable according to claim 3, **characterised in that** a recess (26) is provided between the two spaced retaining fins (24) and **in that** an insertion opening (28) is arranged upstream of the retaining fins (24) in the insertion direction.

5. A Bowden cable according to any one of the preceding claims, **characterised in that** the two supporting arms (15) are only connected to short crosspieces (35) extending transversely to the Bowden cable sheath (2) and **in that** the supporting arms (15) are displaceable from an effective position (F) into a release position (G) under the action of pressure.

6. A Bowden cable according to any one of the preceding claims, **characterised in that** each supporting arm (15) comprises a first, elongate arm portion (36) which projects beyond the body (15 [*sic -* 16]) in the longitudinal direction and on which a moulded-on detent (33) is locally provided, and **in that** the first, elongate arm portion (36) is integrally connected to a short second arm portion (37), the supporting arms (15) being pivoted into their release position (G) by pressing the short arm portions (37) together.

7. A Bowden cable according to any one of the preceding claims, **characterised in that** the Bowden cable (1) is associated with an interior door-operating means (6) and **in that** the holding member (5) is formed in one piece with a supporting part (12) for the operating handle (9).

## Revendications

1. Câble Bowden (1) pour transmettre des forces de traction, qui se compose d'une gaine de câble Bowden (2) extérieure flexible et d'un organe de traction (3) intérieur guidé par endroits dans celle-ci, au moins une extrémité (4) de la gaine de câble bowden (2) étant fixée dans la direction longitudinale à un logement (14) d'un organe de retenue (5) fixe, et à l'extrémité (4) fixe de la gaine de câble Bowden (2) étant prévu un embout (13) qui peut être introduit dans un logement (14) de l'organe de retenue (5), s'étendant approximativement parallèlement à la direction longitudinale de la gaine de câble Bowden (2), et est fixé dans la direction axiale, dans ce logement, au moyen d'au moins un bras d'appui (15) élastique, **caractérisé par** un corps de base (16) prismatique moulé par injection sur la gaine de câble Bowden (2) et formant l'embout (13), avec une section de pied (20) profilée, pouvant être introduite dans le logement (14) de l'organe de retenue (5), et des bras d'appui (15) élastiques placés en vis-à-vis sur le corps de base (16) et fixant axialement la gaine de câble Bowden (2).

2. Câble Bowden selon la revendication 1, **caractérisé en ce que** la section de pied (20) est profilée approximativement en T, la section de pied (20) et la paroi de fond (19), située au-dessus, formant deux rainures de guidage (21) opposées, profilées approximativement en U.

3. Câble Bowden, selon l'une des revendications précédentes, **caractérisé en ce que** le logement (14), prévu sur l'organe de retenue (5), comprend deux nervures de retenue (24) disposées espacées sur lesquelles peuvent être enfilées les rainures de guidage (21) de l'embout (13).

4. Câble Bowden selon la revendication 3, **caractérisé en ce qu'**il est prévu un évidement (26) entre les deux nervures de retenue (24) espacées, et **en ce que** devant les nervures de retenue (24), vu dans le sens d'introduction, est placée une ouverture d'introduction (28).

5. Câble Bowden selon l'une des revendications précédentes, **caractérisé en ce que** les deux bras d'appui (15) sont raccordés uniquement à de courtes nervures (35) s'étendant transversalement à la gaine de câble Bowden (2) et **en ce que** les bras d'appui (15) peuvent être déplacés, par l'action d'une pression, d'une position active (F) à une position de libération (G).

6. Câble Bowden selon l'une des revendications précédentes, **caractérisé en ce que** chaque bras d'appui (15) comprend une première section de bras (36) allongée, dépassant du corps de base (15) dans la direction longitudinale, sur laquelle est prévu localement un ergot d'encliquetage (33) formé rapporté, et **en ce que** le premier tronçon de bras (36) allongé est relié d'un seul tenant à une deuxième section de bras (37) courte, une compression simultanée des courtes sections de bras (37) faisant pivoter les bras d'appui (15) dans leur position de libération (G).

7. Câble Bowden selon l'une des revendications précédentes, **caractérisé en ce que** le câble Bowden (1) est associé à un dispositif d'actionnement intérieur de porte (6) et **en ce que** l'organe de retenue (5) est réalisé d'un seul tenant avec un élément porteur (12) de la poignée d'actionnement (9).
